# EUROPEAN PATENT APPLICATION

(11) **EP 1 176 548 A2**
(43) Date of publication of application: **30.01.2002**
(21) Application number: 01117959.5
(22) Date of filing: 24.07.2001
(51) Int. Cl.: G06K 19/077

(54) **IC package and method of fabricating the same**

(30) Priority: 28.07.2000 JP 2000229757
(71) Applicant: Oji Paper Co., Ltd., Tokyo 104-0061 (JP)
(72) Inventor: Nagura, Toshikazu, c/o Oji Paper Co., Ltd., Amagasaki-shi, Hyogo-ken 660-0811 (JP)
(74) Representative: Schoppe, Fritz, Dipl.-Ing.

(57) **Abstract**

An IC package like an IC card comprising a conductive circuit pattern (2b) and an integrated circuit (6). A circuit pattern (2b) of metal foil is formed on an inlet sheet, the surface of the circuit pattern being covered with a protective film (5). The protective film can be a resist film that is used for etching the conductive circuit pattern. The circuit pattern is electrically connected to the integrated circuit chip (6) by breaking the protective film and bonding the chip to the circuit pattern e.g. by resist welding.

## Description

### BACKGROUND OF THE INVENTION

### Field of the Invention

The present invention relates to an IC (integrated circuit) package such as that referred to as a contact IC card applied to a bank card, a point card or the like, that referred to as a contactless IC card applied to a train ticket, a telephone card or a baggage tag for performing data communication or the like through external radio waves or that referred to as a combinational IC card having both functions of the contact and contactless IC cards.

The IC package, also referred to as a data carrier and generally referred to as an IC card, includes not only that in the form of a card but also a sheet-type one bonded to a substance or that sealed in a vessel. Throughout the specification, the term "IC card" stands for an IC package including those not in the form of cards.

### Description of the Prior Art

A contact IC card having high security for financial transfer or the like is suitable for confirming the user's intension of using the card. A contactless or combinational IC card capable of transferring data through radio waves is observed with interest as a recording medium substituting for a conventional train ticket such as a single ticket or a season ticket provided with a magnetic recording layer on one surface thereof. In particular, it is possible to perform contactless management while moving a baggage or a component, and it is not necessary to take out a train ticket every time the user passes through a ticket barrier but information can be exchanged from a ticket holder or a bag, and hence it is expected that convenience is remarkably improved.

The new information recording medium referred to as an IC card is the general name for those having built-in ICs, which are provided in various modes including cards or sheets such as credit cards, bank cards, point cards and telephone cards widely appearing on the market at present.

IC cards are roughly classified into three types of cards, i.e., a contact IC card, a contactless IC card and a combinational IC card having both functions of the contact and contactless IC cards. The contact IC card is provided with a terminal on its surface for transferring signals through the terminal. At present, disposable IC cards are widely circulated in Europe and so on as telephone cards. Furthermore, experiments for using information-rewritable IC cards as money cards are carried out in many countries, and the IC card is observed with interest as a card to be used in the financial world.

A one-chip contact IC card has a simple structure obtained by loading an IC package chip on a plastic card. The plastic card may be prepared by previously forming a hole having a size and a depth sufficient for receiving the IC package chip in the portion for receiving the IC package chip or by injection molding.

The hole may be formed in the plastic card by a hand reeling machine, or a through hole may be formed in one of two sheets, which are thereafter bonded to each other.

While a one-chip IC card currently forms the mainstream, another type of contact IC card includes a plurality of parts having different functions. In the contact IC card including a plurality of parts, a circuit pattern is used for connecting the parts or for connecting the parts with a specific terminal or the like.

Contactless IC cards are classified into those storing a battery and operating with power received from external electromagnetic waves. The contactless IC card storing a battery lets out large radio waves. On the other hand, the contactless IC card driven by power obtained from external electromagnetic waves has a small transmission output, and matching with a reader/writer must be optimized for maximizing the communication distance. This type of IC card is currently widely circulated in Japan as a telephone card.

### SUMMARY OF THE INVENTION

An object of the present invention is to provide a structure of an IC card capable of remarkably reducing the fabrication cost as compared with a conventional IC package and a method of fabricating the same.

An IC package according to the present invention comprises an inlet sheet loaded with an electronic device, in which the inlet sheet comprises a substrate and the electronic device loaded on this inlet sheet, a conductor provided on at least part of at least one surface of this substrate is covered with a protective film, and a terminal part of the electronic device and part of the conductor are oppositely arranged through the protective film and electrically connected with each other by thermally and/or mechanically breaking the intervening protective film.

The inlet sheet to be used is prepared by bonding a metal foil of copper or aluminum onto the substrate with an adhesive or the like, providing a pattern of the protective film (also referred to as a resist film) on a portion for leaving a circuit in etching and dissolving portions excluding the pattern in an acid or alkaline solution for obtaining a circuit. This circuit remains in a state provided with the protective film and generally has no or inferior electric conductivity although the surface thereof is protected, and hence the protective film is generally separated for connecting the circuit with the electronic device. According to the present invention, however, the circuit can be connected with the electronic device by breaking through the protective film by employing a method of mechanically caulking the electronic device or with heat generated in welding such as a resistance welding machine, a laser welding machine or an ultrasonic welding machine without separating the protective film having been used in the step of forming the circuit by etching, without solder or a conductive adhesive.

A fabrication method according to the present invention is a method of fabricating an IC package comprising an inlet sheet having a substrate loaded with an electronic device, which comprises a step of forming a conductor pattern covered with a protective film on at least part of at least one surface of the substrate and a connection step of opposing a terminal part of the electronic device and part of the conductor to each other through the protective film and thermally and/or mechanically breaking at least part of the intervening protective film while electrically connecting the terminal part and the conductor with each other.

Thus, an IC package having a low fabrication cost for an inlet sheet is obtained according to the present invention.

The foregoing and other objects, features, aspects and advantages of the present invention will become more apparent from the following detailed description of the present invention when taken in conjunction with the accompanying drawing.

### BRIEF DESCRIPTION OF THE DRAWINGS

Fig. 1 is a plan view showing a circuit board employed in the present invention;
Fig. 2 is a sectional view of the circuit board taken along the line A-A' in Fig. 1;
Fig. 3 is a plan view showing the circuit board after etching;
Fig. 4 is a sectional view of the circuit board taken along the line A-A' in Fig. 3;
Fig. 5 is a plan view showing an inlet sheet employed in the present invention;
Fig. 6 is a sectional view of the inlet sheet taken along the line B-B' in Fig. 5;
Fig. 7 is an enlarged sectional view showing a portion loaded with an IC circled in Fig. 6 along with a caulking method;
Fig. 8 is an enlarged sectional view showing the portion loaded with the IC circled in Fig. 6 along with an electrical connection method;
Fig. 9 is a sectional view showing an IC chip and the inlet sheet along with the electrical connection method;
Fig. 10 is a sectional view showing an IC card according to an embodiment of the present invention;
Fig. 11 is a sectional view showing an IC card according to another embodiment of the present invention;
Fig. 12 is a sectional view showing an IC card or tag employing the inlet sheet according to this embodiment;
Fig. 13A is a sectional view showing another IC card or tag employing the inlet sheet according to this embodiment in an intermediate state of fabrication, and Fig. 13B is a partially fragmented perspective view showing still another IC card or tag in an intermediate state of fabrication;
Fig. 14A is a sectional view showing an exemplary tag employing the inlet sheet according to this embodiment, and Fig. 15B is a sectional view showing another exemplary tag;
Fig. 15A is a sectional view showing yet another IC card or tag employing the inlet sheet according to this embodiment, and Fig. 15B is a sectional view showing yet another IC card or tag;
Fig. 16 schematically illustrates a state of resonance frequency measurement of an IC card/tag; and
Fig. 17 schematically illustrates a state of communication distance measurement of the IC card/tag.

### DESCRIPTION OF THE PREFERRED EMBODIMENTS

While a substrate for an inlet sheet may be formed by any substance such as a film, a glass epoxy substrate or a paper phenol substrate employed for an etched circuit board, those made of a general-purpose film material such as PET (polyethylene terephthalate), OPP (oriented polypropylene) or polyimide is preferably employed from the view point of cost when used in the form of a card.

It is also preferable to perform bonding facilitation treatment (surface treatment providing surface roughness on a side bonded to a substrate by chemical or physical treatment for improving bond strength) on a surface of a metal thin layer bonded to the substrate.

An adhesive can be prepared from, for example, an epoxy-based or polyester-based adhesive, and can be used by thermal bonding or a method of directly applying resin dissolved or dispersed in a solvent onto a metal foil.

Each of the resin material layers integrally holding the inlet sheet from both sides may be formed by a single covering layer or may have a multilayer structure consisting of an intermediate layer coming into contact with the inlet sheet and a covering layer covering the intermediate layer. Another covering layer used at need may be further provided on the covering layer as the case may be. At least one of these resin material layers is preferably made of the same resin material as that for the substrate in order to avoid employment of an adhesive layer or the like in view of cost reduction.

Furthermore, it is preferable that all of these resin material layers are made of the same resin material as that for the substrate in order to avoid employment of an adhesive layer or the like for attaining cost reduction and providing an integral appearance.

While the present invention is applicable to any one of contact, contactless and combinational IC cards, a contactless card preferable for employing the present invention and a circuit board used therein shall now be described.

Firstly, formation of the circuit board and the inlet sheet is described with reference to the drawings.

### 1. Steps of Forming Circuit Board and Inlet Sheet

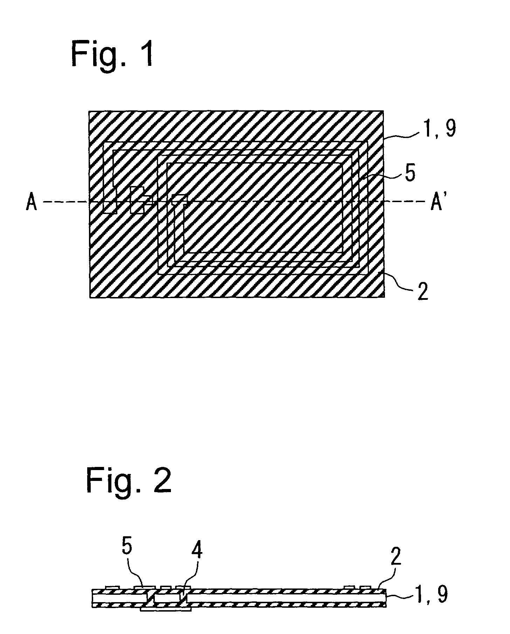

Figs. 1 and 2 are a plan view and a sectional view of the circuit board respectively. Fig. 1 is a plan view of the circuit board employed in the present invention, and Fig. 2 is a sectional view of the circuit board taken along the line A-A' in Fig. 1. Metal foil members 2 serving as metal thin layers are bonded to a substrate 1 with or without adhesive layers 9, to form the circuit board. Protective films 5 form patterns on the metal foil members 2 provided on the circuit board. Portions of the metal foil members 2 not covered with the protective films 5 are removed by etching, for forming circuit patterns.

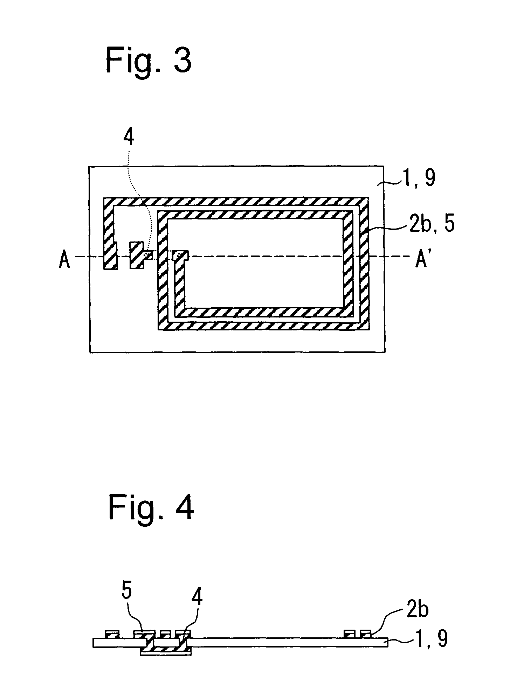

Figs. 3 and 4 are a plan view and a sectional view of the circuit board respectively, with circuit patterns 2b formed by patterning the metal foil members 2 through masks of the protective films 5. Fig. 3 is a plan view of the circuit board after etching, and Fig. 4 is a sectional view of the circuit board taken along the line A-A' in Fig. 3. The protective films 5 remain as formed on the circuit patterns 2b. The circuit board formed with the circuit patterns 2b by etching or the like is referred to as "etched circuit board", to be distinguished from that before etching.

In this case, the circuit patterns 2b are formed on both surfaces of the substrate 1. Through holes 4 are formed in the substrate 1, and the circuit patterns 2b provided on both surfaces of the substrate 1 are connected to each other through the through holes 4.

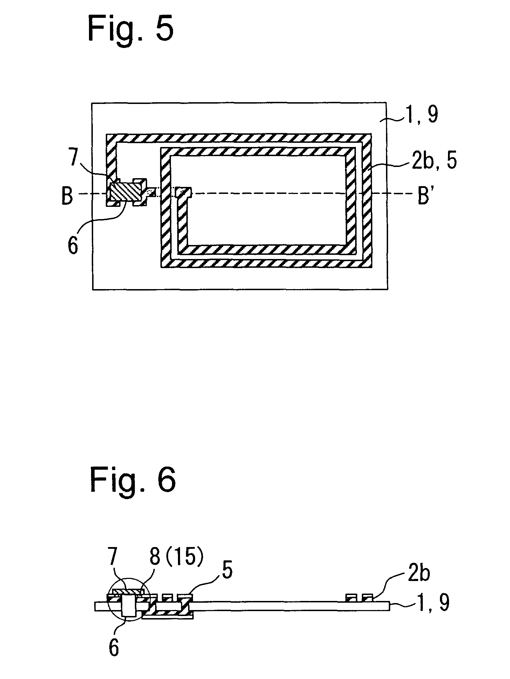

A sheet prepared by loading electronic devices such as an IC chip, a capacitor and an antenna on the etched circuit board is referred to as "inlet sheet". Figs. 5 and 6 show this inlet sheet. Fig. 5 is a plan view of the inlet sheet, and Fig. 6 is a sectional view taken along the line B-B' in Fig. 5.

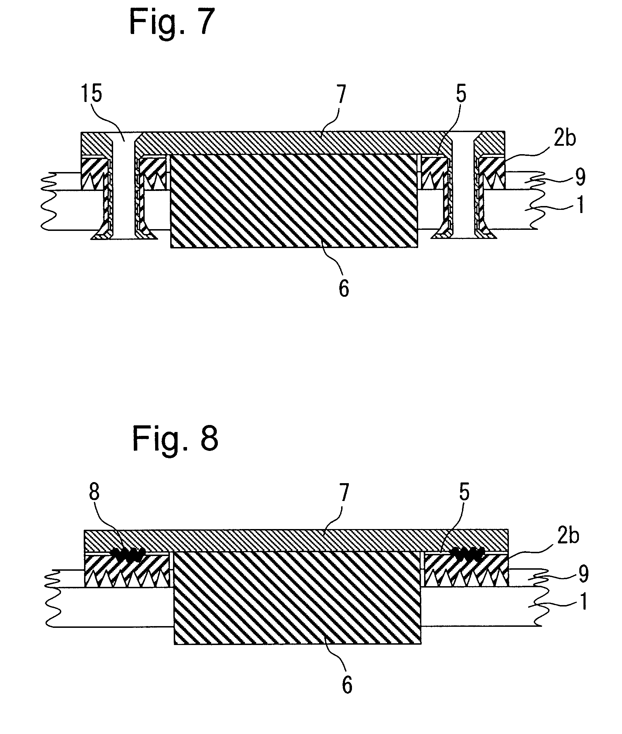

Figs. 7 and 8 are enlarged sectional views showing different embodiments of a portion loaded with an IC circled in Fig. 6. Referring to each of Figs. 7 and 8, an IC chip 6 is sealed to expose a terminal 7, which is arranged on the protective film 5 to be connected with the circuit pattern 2b of the metal foil member through broken portions of the protective film 5. The circuit pattern 2b of the metal foil member is, for example, an antenna circuit.

Fig. 7 shows such connection by caulking that caulked portions 15 pass through the substrate 1 to fix the IC chip 6 to the substrate 1, and the protective film 5 is broken on the caulked portions 15 so that the terminal 7 and the circuit pattern 2b come into contact and conduct with each other.

Fig. 8 shows such exemplary connection by welding that welded portions 8 are formed by performing resistance welding on the terminal 7 and the circuit pattern 2b of the metal foil member 2, and the protective film 5 on these portions 8 are broken.

Description is now made on ① fabrication steps for the circuit board and the inlet sheet, followed by description on ② assembling of an IC card.

Each metal foil member 2 and the substrate 1 forming the circuit board are first described in detail.

### Fabrication Step for Inlet Sheet

### [Metal Foil Member]

The metal foil member 2 to be used is preferably made of aluminum foil, copper foil, gold foil, silver foil, zinc foil, nickel foil, tin foil, alloy foil or the like prepared by an electrolytic method, a rolling method, a precision rolling method or a foiling method (mainly for arts and crafts).

The metal foil member 2 is preferably subjected to bonding facilitation treatment on the side bonded to the substrate in general. While high bond strength can be attained by increasing roughness formed by bonding facilitation treatment, the strength of the metal foil member may be reduced if the roughness is excessive. When using a thin metal foil member, the surface of the metal foil member may be finely roughed by bonding facilitation treatment to result in a problem in reproducibility of thin lines.

The metal foil member 2, generally surface-oxidized by air, is preferably subjected to anti-oxidation treatment Aluminum foil is stabilized with a film of aluminum oxide formed on its surface.

In general, a metal foil member employed for an etching pattern is prepared from copper foil or aluminum foil. The copper foil includes rolled copper foil (including that prepared by precision rolling) and electrolytic copper foil. The electrolytic copper foil is prepared from raw material of a copper sulfate solution by electrically precipitating copper on a rotating drum dipped in the copper sulfate solution and winding the same. The obtained copper foil has a glossy surface formed by transfer of gloss on the drum surface and an opposite coarse surface. It is preferable to perform anticorrosive treatment and heat resistance treatment on the glossy surface while performing chemical and/or physical surface roughening (bonding facilitation treatment) on the coarse surface for improving adhesion to a substrate.

The rolled foil, prepared by rolling a metal strip with a rolling mill of two to four stages (six to 20 stages in the case of precision rolling), generally has high smoothness on both surfaces. Precision-rolled foil having excellent homogeneity in thickness is applied to a fine pattern. The rolled foil is inferior in adhesion if left in the rolled state. Therefore, it is preferable to perform chemical and/or physical surface roughening on one surface while performing anticorrosive treatment and heat resistance treatment on the opposite surface, similarly to the electrolytic copper foil.

The rolled copper foil, having excellent mechanical strength against repetitive bending, is suitable for a wire of a movable part of a hard disk or a printer of a computer or the like. The electrolytic copper foil, inferior in bending resistance to the rolled copper foil, can be prepared at a low cost An exemplary IC card employed in the present invention is not bent and hence can be sufficiently prepared from electrolytic copper foil.

Aluminum foil is prepared by rolling. Aluminum, having larger drawability than copper, is preferably readily connected when mechanically caulked. Furthermore, aluminum, requiring a cost of about 1/5, is highly preferable in consideration of cost reduction. In addition, the melting point of aluminum is about 660°C, which is lower by about 400°C as compared with the melting point of 1080°C of copper. Thus, the quantity of heat applied in welding can be reduced so that, when employing a thermally weak film as the substrate 1, damage of the film can be reduced and is highly preferable.

When the metal foil member 2 is connected with a terminal of an electronic device by welding, an alloy (tilting material of components having gradually changing concentrations in a microscopic view) is formed on the welded portion to hardly turn into a battery formed by different types of metals. Furthermore, it is highly preferable that the metal foil member 2 is covered with the protective film 5 to hardly turn into a battery formed by contact between the metal foil 2 and the terminal on a portion other than the welded portion.

In addition, realistically, air can duly be cut off in welding due to the presence of the protective film 5, thereby enabling welding of aluminum hardly welded in the air.

However, aluminum has specific resistance of about 1.5 times that of copper, and hence the thickness or the width of a circuit must be increased to attain the same resistance value. Furthermore, aluminum has higher metal dissolution reactivity in etching as compared with copper, and it is difficult to precisely etch a dense pattern. Therefore, in order to obtain the same performance as that of a circuit pattern employing copper, attention is required on pattern change or the like.

Aluminum, referred to an amphoteric metal, can be dissolved not only by acid but also by alkali. Aluminum is etched with a solution of either one. Dissolution of aluminum is quick in reaction as compared with copper, to provide high production efficiency.

### [Protective Film]

The protective film 5 employed in the present invention can be provided by film bonding, application or printing. The protective film 5 may be provided not only on the metal foil member 2 but also on the substrate 1. Furthermore, the protective film 5 may be provided either before or after an etching step for fabricating the inlet sheet. When chemically etching the metal foil member 2, a protective layer provided before the etching step for leaving a necessary pattern is referred to as a resist layer.

Film bonding may be performed by employing a film previously provided with a tacking agent, or by heat sealing. When formed by application, the protective film 5 may be provided by a method of dipping the same in a polymer impregnation tank a gravure, a method of employing an application head such as a bar, an air knife or a slit die, or a generally used method such as spin coating, spray coating, or vapor deposition. The thickness of the protective film 5 is preferably about 0.1 to 20 µm since connection cannot be performed or rendered unstable in the case of welding if the protective film 5 is too thick while resist performance is reduced in etching if the protective film 5 is too thin.

It is highly preferable in view of cost reduction to use a resist pattern in etching as the protective film 5 as such, since no step is required for removing the protective film 5. Ink having excellent adhesion to the metal foil member 2 suitable for a printing method can be used for the resist pattern. The characteristics of the ink to be used may depend on whether an etching solution to be used is acidic or alkaline. It is preferable not to use a material such a resin, a pigment or an additive that reacts with the etching solution to deteriorate the performance of the resist film. It is also possible to use ink resistant against both acidity and alkalinity. The ink to be used is radiation-set by UV (ultraviolet ray), EB (electronic beam) or the like, or hardened by ions, moisture, drying or heat, to be used as the resist film.

The protective film 5 preferably contains no substance facilitating corrosion of metal foil such as sodium ions or halogen ions, as well.

A generally used printing method such as gravure printing, offset printing, screen printing or letterpress printing is employable.

In general, the metal foil member 2 to be used for the inlet sheet directly comes into contact with a bonding layer, a covering layer, an intermediate layer or the like when the same is molded into a card. When each layer coming into contact with the metal foil member 2 may contain a substance facilitating corrosion such as sodium ions or halogen ions, the protective film 5 can preferably cut off these ions for improving durability.

When the protective film 5 is used as the resist film in etching, complete protection cannot be attained as compared with protective films provided on overall surfaces since only the upper surface of the pattern 2b of the metal foil member left through etching is covered with the protective film 5 and the metal foil member 2 is exposed on the side surfaces, while the thickness of the metal foil member 2 is extremely small as compared with the width of the circuit pattern 2b, not to remarkably reduce the performance.

### [Substrate]

The material for the substrate 1 is selected from electrically insulating materials. The substrate 1 may be formed by a rigid substrate or a flexible substrate.

The rigid substrate is prepared by impregnating a sheet of aramid fiber or glass fiber with thermosetting resin such as epoxy resin, or impregnating paper with thermosetting resin such as phenol resin and hardening the same by applying heat and pressure. The thermosetting resin is formed by thermosetting macromolecules described below. The rigid substrate, having a high elasticity with respect to mechanical stress, is applied to a widely used electrical appliance such as a computer, a portable telephone, a television or a radio. This substrate, having a certain degree of thickness, is not unemployable as the inlet sheet used in the card, but requires caution.

On the other hand, the flexible substrate, formed by providing a metal foil circuit on a film-type substrate, is used for a head of a printer or a wire in an automobile and generally applied to a shape-changing substance or a moving substance. A film-type substrate used for a card is made of resin.

Resin is an aggregate of high-molecular compounds. Resin is formed by such a crystal structure that a part of macromolecules are regularly folded and the remaining parts are amorphous state having no crystal structure at room temperature. Macromolecules are bonded to each other with weak intermolecular force, and hence thermal behavior of resin depends on the structures and the molecular weights of the macromolecules. Macromolecules whose aggregate structure is loosened and softened when the temperature of resin is increased are defined as thermoplastic macromolecules. On the other hand, it is difficult to fluidize macromolecules containing thermally reacting functional groups on macromolecular chains by increasing the temperature since the functional groups react to heat to form networks in the macromolecules and strongly bond the macromolecules to each other. Such macromolecules are defined as thermosetting macromolecules. There are also radiation-setting macromolecules forming such networks by ultraviolet rays or electronic beams.

While a film-type substrate is fabricated by a method such as non-orientation method, uniaxial orientation method or biaxial orientation method, it is known that a strong film is obtained by drawing since molecular orientation directions of resin are regularized by drawing. However, while there is no problem when the film is oriented under a certain temperature condition and used at the room temperature, oriented molecules tend to return to the original states when used in another environment exceeding the temperature, leading to a high possibility of contraction of the film and trouble such as curling.

The substrate 1 is prepared from PET, PEN (polynaththalene terephthalate), PPS (polyphenylene sulfide), PBT (polybutylene terephthalate), a polyimide film, OPP, PC (polycarbonate), ABS (acrylonitrile-butadiene-styrene), PVC (polyvinyl chloride), PETG (modified polyester resin obtained by polymerizing at least three components of ethylene glycol, terephthalic acid and 1,4-cyclohexanedimethanol), PP (polypropylene) or PE (polyethylene), to be bonded to the metal foil member 2 of copper or aluminum with an adhesive.

Most resin can be directly laminated on the metal foil member 2. However, polyimide or the like prepared by solvent casting or the like has neither a melting point nor a thermal deformation temperature and cannot be directly laminated. Such resin is not dissolved but carbonized when the temperature is increased. Substitutionally, this resin is directly applied to the metal foil 2 for forming a film.

The film-type substrate 1 according to the present invention may be transparent, translucent or opaque, and may be colorless, colored or white. The state of the film depends on its application. A translucent or opaque film is generally obtained by blending an inorganic or organic pigment in resin. The inorganic pigment to be blended may be typically prepared from titanium oxide, calcium carbonate, barium sulfate or silica singularly or in combination. On the other hand, the organic pigment, varying with the type of the film resin, is basically preferred to be prepared from resin, incompatible with the film resin, having a size and a refractive index sufficient for irregularly reflecting visible rays. A transparent film may contain a pigment in a quantity not damaging its transparency. In addition to the aforementioned pigment, various types of additives such as a plasticizer, an antistatic agent and the like are blended in the film. It is also preferable to perform embossing or the like on the surface of the substrate 1, for deairing in bonding.

A substrate having a structure obtained by directly providing a thermoplastic resin layer on one of the metal foil members 2 may be prepared from a material identical to that for the aforementioned substrate 1 supplied in the form of film.

### [Bonding]

The present invention includes not only that employing a circuit board formed by bonding a metal foil member and a substrate to each other with an adhesive or paste but also that employing a circuit board formed by directly bonding a metal foil member and a substrate to each other by heat and pressure without employing an adhesive or paste.

The adhesive or paste can be prepared from any material such as polyester, polyurethane, acrylic, phenol, vinyl acetate, vinyl chloride, starch, polyvinyl alcohol, SBR (styrene butadiene rubber), vinyl chloride acetate or the like so far as the same can bond the metal foil member 2 and the film to each other.

In a circuit board having a metal foil member and a substrate directly bonded to each other, the metal foil member and the substrate are bonded to each other since a thermoplastic film is wedgedly pushed into fine roughness on the surface of the metal foil member by heat and pressure. According to this method, bond strength between the metal foil member and the substrate is reduced as compared with a circuit board having a metal foil member and a substrate bonded to each other with an adhesive or a circuit board formed with a metal layer by plating or vapor deposition, such that the metal foil member and the substrate may be readily separable from each other similarly to an adhesive seal or a tape of cellophane. When such a circuit board is subjected to general soldering or reflow, provided with a component, applied to a printer cable or the like, repetitively exposed to mechanical stress or used under a considerably high temperature condition in an electric apparatus or an automobile, the bonding between the metal foil member and the substrate is readily broken. Therefore, it is difficult to use the circuit board under such conditions.

This bonding can be implemented by a method of bonding the substrate 1 to the metal foil member 2 as a film-type sheet or a method of melting and extruding thermoplastic resin for defining the substrate 1 onto the metal foil member 2.

### [Inlet Sheet]

After removing part of the metal foil members 2 on the circuit board obtained by bonding the substrate 1 and the metal foil members 2 to each other in the aforementioned manner by etching and forming the necessary circuit patterns 2b, the inlet sheet can be obtained by mounting the packaged IC chip 6 on the circuit board as shown in Figs. 5 and 6. The inlet sheet defines a core part for assembling a contactless IC card described below.

Circuit pattern 2b can be formed in the following manner. A photosensitive resin layer is provided on the metal foil member 2 of the circuit board for transferring the circuit pattern 2b to the photosensitive resin layer through a mask for the circuit pattern 2b formed by a negative or positive photographic film or a chromium film, or directly drawing the circuit pattern 2b on the metal foil member 2 of the circuit board by a method such as printing or lettering. Unnecessary metal parts excluding the circuit pattern 2b are dissolved by the so-called etching with a ferric chloride solution or a caustic soda solution through the circuit pattern 2b formed in the aforementioned manner, so that the etched circuit board can be prepared by forming the necessary circuit pattern 2b by the metal foil member 2.

It is preferable to render the area of the metal foil member 2 left after etching not more than 90 % of the overall card area, which depends on the circuit pattern, so that a bonded portion between resin materials can be sufficiently ensured in the case of bonding the circuit board to another covering layer or the like by thermal fusion for assembling the IC card described later.

The circuit board can also be formed by that having metal foil members bonded to both surfaces thereof. A plane capacitor can be formed on such a circuit board. The plane capacitor serves as an extremely useful component when performing tuning for correctly adjusting the frequency in a contactless IC card. The circuit board having metal foil members bonded to both surfaces thereof can also be utilized by conducting both metal foil members by a method such as through hole plating, mechanical or welding for forming a three-dimensional circuit

### [Connection]

The feature of the present invention resides in a mechanical caulking method or a thermal connection method employing the circuit pattern 2b provided with the electronic device and the protective film 5.

The mechanical caulking method is carried out for mechanically bonding the inlet sheet of the circuit provided with the protective film 5 and the electronic device with opposite male and female dies or a Thomson knife edge. The metal foil members provided on the front and back surfaces are mechanically connected with each other when performing caulking, and hence a metal having excellent drawability is preferable. In the present invention, excellent drawability is preferably obtained when employing aluminum foil as the circuit material.

The thermal connection method, which can break the protective film 5 by locally applying instantaneous heat and further minimize deformation of the substrate 1, is extremely convenient for using a substrate of a material having low heat resistance.

Methods of resistance welding include ① a method of feeding current through a material to be welded between opposed electrodes for performing welding, ② a method of feeding current between electrodes arranged in parallel with each other for performing welding, ③ a method of causing resistance heating on a portion between forward ends of electrodes connected with each other with a small width, and ④ a composite method of the methods ① and ③. The method ① is preferable in the present invention.

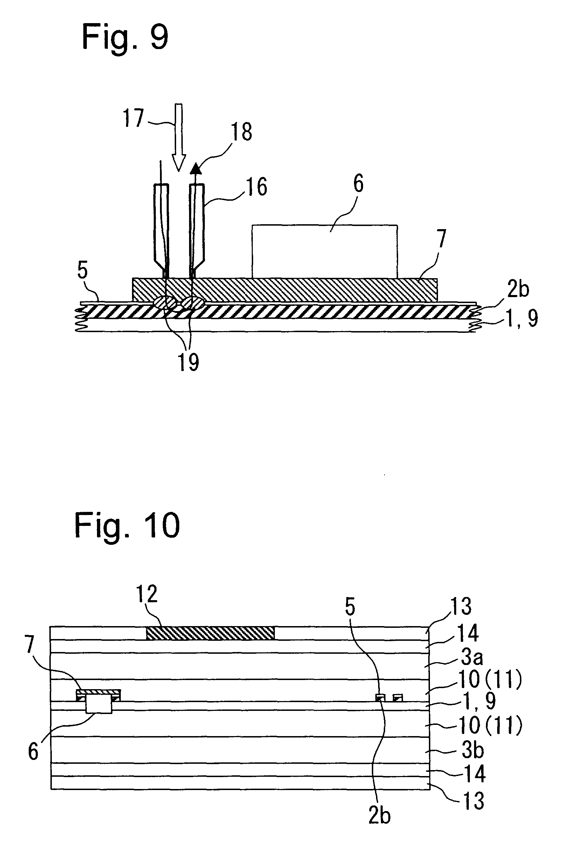

As shown in Fig. 9, two electrodes 16 arranged in parallel with each other are brought into contact with the terminal 7 by applying a load 17 and electricity 18 of low voltage/large current is applied in this state for a short time so that parts 19 having high resistance instantaneously generate heat for enabling welding in the method ②. It is conceivable that the protective film 5 employed in the present invention, having a thickness of about 2 µm, is broken by heat generated by part of the large current instantaneously flowing in the protective film 5 of high resistance to cause contact-welding between metals. Due to the employment of the two electrodes 16, heat may be generated on two portions to weld two portions depending on the welding conditions. When power is larger, the substrate 1 may be broken between the two electrodes 16 conceivably because current flows to the substrate 1. While an electronic device 6 is connected upward in Fig. 9, the substrate 1 may be partially perforated for connecting the electronic device 6 in a direction similar to that in Fig. 8 with no problem. This also applies to the case of performing connection by caulking.

The electricity 18 may be controlled by alternating current, a capacitor, a transistor, a DC inverter or an AC inverter, while a power source of a transistor or AC inverter system is preferably employed for resistance welding of a fine portion employed in the present invention.

Laser welding is performed through a YAG laser. A laser beam is applied to a connected portion through an optical fiber member, so that the protective film 5 is broken and welded by heat of the laser.

Ultrasonic welding is a method of rubbing the metal foil circuit and the terminal 7 of the electronic device 6 for connecting the same by frictional heat. A piezoelectric element is vibrated by an electric signal for generating ultrasonic waves and transferring the same to a connector of a metal called an ultrasonic horn, while a welding head integrated with the ultrasonic horn provided with a brace is provided on a portion exhibiting the maximum amplitude. The brace is so provided as to reliably transmit the energy of the ultrasonic waves to the portions to be welded. When holding the portions to be connected with the welding head and a metal stand or the like provided with a brace and applying vibration, the protective film 5 is broken by friction before welding, for enabling connection between the terminal 7 and the circuit

A component such as an IC related to fabrication of the inlet sheet is now briefly described.

### [IC]

The IC chip employed in the present invention is a package chip of the 135 KHz, 4.9 MHz, 6.5 MHz, 13.56 MHz or 2.54 GHz band. An IC employed for an IC package may be in the form of a bare chip prepared by merely providing a bump on a chip or in the form of a package chip prepared by die-bonding a chip to a lead frame material also defining a terminal part, wiring a portion between a pad part of the chip and the lead frame with a gold wire or the like and thereafter sealing the same with epoxy resin or the like. The bare chip is not employed in the present invention. The lead frame employed in the package chip can be formed by that of a nickel alloy such as 42 alloy, a copper alloy, SUS (stainless steel) or the like generally employed as a lead frame material, and a single or both surfaces thereof are preferably totally or partially plated with tin or silver. When performing thermal connection in the present invention, such plating is preferably performed for facilitating connection. The package chip, requiring a high cost in general, is protected with an electrode or sealing resin and has high reliability against mechanical force. On the contrary, the bare chip is simplified in working of the connected portions and hence inferior in reliability although the same requires only a low cost. An IC 6 shown in each figure is a package chip.

Recently, development of an IC referred to as a CSP (chip-sized package) similar in shape to the bare chip is progressing. This CSP prepared by applying resin sealing to and newly providing an electrode on the bare chip is a technique devised due to recent improvement of the degree of integration of semiconductor devices, and such a CSP can also be employed as the IC chip in the present invention.

### 2. Material and Steps for Obtaining IC Card

Material and steps employed for obtaining the card of the final product from the inlet sheet employing the circuit board having the protective film 5 according to the present invention are now described.

First, Fig. 10 shows the basic structure of the IC card. Fig. 10 is a sectional view of the IC card according to the present invention. Covering layers 3a and 3b are bonded to both surfaces of the inlet sheet, formed by the substrate 1, the metal foil circuit 2b, the protective film 5, the IC 6 and the terminal 7, consisting of the circuit board provided with the protective film 5 through adhesion layers 10 or intermediate layers 11. The covering layers 3a and 3b are generally provided with printing layers 14 and outer protective layers 13. A visible information recording layer 12 can be properly provided on the upper or lower protective layer 13 depending on a display method as employed.

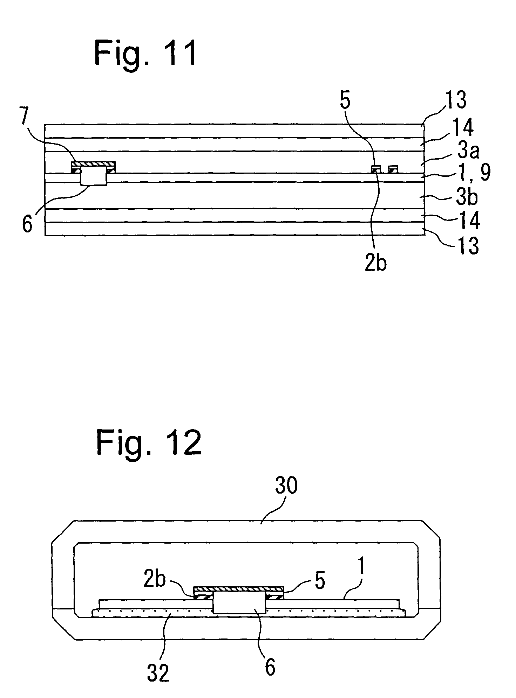

Fig. 11 is a sectional view showing an IC card according to another embodiment of the present invention. The IC card according to this embodiment has the simplest structure consisting of an inlet sheet and covering layers 3a and 3b provided on both surfaces thereof, with neither adhesion layers 10 nor intermediate layers 11. According to the present invention, the simple structure shown in Fig. 11 can also be applied to the IC card without problem, hence a drastic cost reduction is possible.

### [Covering layer]

The covering layers 3a and 3b, which are materials requiring structural strength of the outermost shell of the completed IC card, can be further provided with the printing layers 14, magnetic layers, the protective layers 13 and the like. Film-type or sheet-type polyester, polycarbonate, ABS, APET (amorphous PET), polyvinyl chloride, polyethylene, polypropylene, nylon, polyimide, polystyrene, a polymer alloy, a plastic film of engineering plastic or the like, a metal plate of copper or aluminum, a simple substance or a composite of paper, net and/or the like, or a material prepared by impregnating glass fiber or paper with epoxy resin or the like can be employed as the covering layers 3a and 3b. The covering layers 3a and 3b may also serve as substrates, depending on the multilayer structure of the card. The covering layers 3a and 3b may be transparent, translucent or opaque depending on the application thereof. In most circulating translucent and opaque plastic films, a white pigment such as titanium oxide, calcium carbonate or an organic pigment is kneaded into resin, or the printing or coating is applied to the surfaces.

The covering layers 3a and 3b can be bonded to most materials when employing the adhesion layers 10.

### [Adhesion Layer]

The adhesion layers 10 have functions of bonding the substrate 1 and the covering layers 3a and 3b, the covering layers 3a and 3b and the intermediate layers 11 etc. to each other for forming a single sheet. Bonding methods include a laminating method and an injection method. The laminating method is a method stacking films by the same method as that for forming the circuit board and bonding the same to each other by hot pressing or the like. Adhesive resin to be employed for the adhesion layers 10 is preferably prepared from a generally used dry laminate adhesive such as polyester, ABS, acrylic or polyurethane, hot melting and thermosetting resin, moisture-setting resin or radiation-setting resin. In order to adjust the thickness of the card to a regular value, the quantity of application of such resin must be adjusted along with the thicknesses of the covering layers 3a and 3b and the substrate 1. In particular, a hot melting adhesive is suitable to thick coating due to high viscosity, for preferably increasing the thickness of the card. While the adhesive can be directly applied to the covering layers 3a and 3b or the inlet sheet, a hot-melting resin adhesive can be prepared as a rubber sheet, to be previously formed as a film on a separator paper or the like and used by separating the separator sheet or the like. The adhesion layers 10 can also bond respective films to each other by a wet laminate adhesive, as the case may be.

The injection method, injecting thermally melted resin between the covering layers 3a and 3b for molding the card, can simultaneously seal the covering layers 3a and 3b and the integrated inlet sheet. The resin to be used can serve both as an adhesive for bonding the covering layers 3a and 3b and a structural material. While resin equivalent to that to be used in the laminating method is employable for the adhesive, the resin preferably has lower melt viscosity as compared with the hot melting adhesive to be employed in the laminating method since the resin spreads in narrow spaces such as those between the covering layers 3a and 3b and the substrate 1 through a plurality of resin supply ports.

### [Intermediate Layer]

When employing layers similar to the covering layers 3a and 3b not for outermost layers but for intermediate portions, these layers are referred to as intermediate layers 11. The intermediate layers 11 can also be prepared from a material similar to that for the covering layers 3a and 3b, and obviously a material similar to that for the substrate 1.

### [Visible Information Recording Layer]

The visible information recording layer 12 is provided when it is necessary to record information such as the balance, the serial number of the contactless IC card and the like as visually recognizable character information. The character information can be made by physically creating with a laser beam, by forming a deposition film of tin or the like and thermally breaking the film for making recording, by providing a single-recording type one such as that prepared by forming a recording layer by applying a thermal coloring dye such as leuco dye and making thermal recording on the layer, or by forming a rewritable display layer of a thermal type, a resin type, a magnetic type, an electric field type or the like.

### [Protective Layer]

The protective layers 13 are generally provided for protecting the printing layers 14 or the visible information recording layer 12, and a method of providing the protective layers 13 by printing or coating or a method of bonding overlay films is possible. When provided by printing or coating, the protective layers 13 may be prepared from at least one type of resin such as polyvinyl acetal, polyvinyl butyral, acrylic resin, polyurethane resin, vinyl chloride-vinyl acetate copolymer or epoxy resin, or from a paint or ink obtained by dispersing an inorganic pigment such as aluminum or titanium oxide, an organic pigment such as silicone, polyethylene, polystyrene particles or the like or a lubricant in the resin.

The overlay films, which are transparent films larger in thickness than the printing layers 14, are excellent in protection of printing or the like.

### [Printing Layer]

In general, the printing layers 14 are provided under the transparent protective layers 13, for printing designs for decoration of the card, the agreement for using the card, a visible bar code to be read by a machine, and/or the like. Printing may be performed in the card state, or the covering layers 3a and 3b may be previously subjected to heat-resistant printing. In the case of previously performing printing, the substrate may be expanded or contracted due to heat for molding the card and hence printing is preferably performed with a previously contracted or expanded design or on a substrate previously dimensionally stabilized by heat treatment or the like.

### [Molding]

The contactless IC card may be molded by a laminating method or injection molding. In the laminating method, covering layer sheets, the inlet sheet provided with the IC 6, sheet paste and the like are superposed with each other to be heated and compression-bonded by hot pressing.

While heating is performed for softening and hardening an adhesive, the card may be curled or the IC chip 6 may be broken unless molding conditions are selected. It is preferable to perforate IC chip portions of the intermediate layers 11, the adhesion layers 10, the inlet sheet and the like for uniformalizing the thickness of the card. In a laminator, it is preferable to perform vacuum defoaming in molding.

In the injection molding, melted resin is injected into the clearance between the front and back covering layers 3a and 3b set in a mold. The inlet sheet is previously temporarily attached to one of the covering layers 3a and 3b. The injected resin is extruded from a small hole with high pressure, and hence an injection port is generally located at the center of the sheet and there is such a possibility that the resin is radially oriented from the injection port. Curling may be caused unless the thicknesses of the covering layers 3a and 3b, the type of the resin, the extrusion speed, the melt viscosity, heating/cooling conditions and the like are optimized.

When bonding the covering layers 3a and 3b and the circuit board, both of which are thermally fusible resin, in the present invention, there is such combination that these thermoplastic resin are temporarily melted and fused to enable integration. When film-type thermoplastic resin is heated to a temperature exceeding its melting point in a free state, the film may be remarkably deformed to lose its original form. However,m when pressurized heated in a press plate, its shape is more preferably maintained.

### [Punching]

The molded sheet can be cut into cards with a Thomson blade or a male/female blade mounted on an electric, pneumatic or hydraulic press.

### [Other Exemplary Structures of IC Card]

The IC card is assembled with the adhesion layers 10 in the above description. However, when applying thermally fusible thermoplastic resin to the covering layers 3a and 3b and the intermediate layers 11 used at need similarly to the substrate 1, the layers 3a, 3b and 11 of the thermally fusible thermoplastic resin and the substrate 1 can be connected with each other by thermal bonding, preferably for reducing the cost. Particularly when employing the same resin, adhesion is preferably more improved. In this case, even thermal contraction rates, elasticity rates, and color tones of the respective layers can be equalized with each other, whereby not only the card looks fine with no dislocation but also a malfunction hardly takes place in a system of optically detecting the card such as a card counter. Furthermore, the degree of collapse on a cut surface of the card is smaller than that in a card prepared with an adhesive layer conceivably because the elasticity rate of the respective layers are equalized with each other, preferably for mechanically transporting the card.

The cost can be reduced drastically by preparing all of the substrate 1, the covering layers 3a and 3b and the intermediate layers 11 to be used at need from thermally fusible thermoplastic resin and thermally bonding all layers to each other.

### [Conclusion]

In an etched circuit board applied to a conventional IC card, a protective film employed for masking in etching is removed in order to improve connection for mounting an electronic device.

According to the present invention, excellent connection can be attained by thermally breaking the protective film by the method of mechanically caulking the electronic device on the etched circuit board provided with the protective film or by resistance welding, whereby a step of separating the protective film can be omitted and the cost can be reduced. In an assembling step, connection is performed by mechanical caulking or welding, whereby no auxiliary material for electrical connection such as a generally employed conductive adhesion layer, anisotropic conductive adhesive or solder is required, and the cost can be further reduced.

While Examples of the IC package according to the present invention are now described, the present invention is not restricted to these Examples.

The IC package illustrated in each of the following Examples is applicable to both a card and a tag, in addition to that described below.

### (Example 1)

An IC card having a sectional structure substantially similar to that of the IC card shown in Fig. 10 was prepared. In practice, the adhesion layers 10 and the intermediate layers 11 shown in Fig. 10 were not employed. The remaining structure was identical to that shown in Fig. 10.

### [Preparation of Inlet Sheet]

A substrate 1 was formed by a transparent substrate of PET having a thickness of 50 µm. An aluminum foil member having a thickness of 20 µm provided with iroughness on a surface to be bonded was bonded to the substrate 1 with a polyester-based adhesive by a dry laminating method, to obtain a circuit board.

Thermally dried Brightop A (trademark product by Dainippon Ink and Chemicals, Inc.) was gravure-printed on this circuit board in a desired antenna circuit pattern, for forming a protective film (resist film) 5 for an etching step. An aluminum foil portion not subjected to resist printing was etched with a caustic soda solution for forming a circuit 2b for a loop antenna.

As shown in Fig. 9, a terminal part 7 of a package chip (MIFARE chip: product by Siemens K.K.) 6 totally plated on both sides was opposed to a terminal part of the antenna circuit 2b provided with the protective film 5, and pressed from above by two electrodes of a resistance welder with a load of 200 g, for feeding electricity and performing welding. The protective film 5 was broken and the terminal part 7 was electrically connected to the terminal part 2b of the circuit part provided under the same, for obtaining an inlet sheet

### [Preparation of Contactless IC Card]

The aforementioned inlet sheet was superposed from both surfaces with an adhesion layer of 100 µm and covering layers 3a and 3b of 250 µm provided with a protective layer of 10 µm (total thickness: 260 µm) so that the thickness of the overall card was 760 µm and bonded/thermally fused by hot pressing under conditions of a temperature of 150°C and pressure of 10 Kg/cm². The covering layers 3a and 3b were prepared from white PET.

The obtained substance was cooled and thereafter punched, making it into contactless IC cards.

### (Example 2)

Example 2 was prepared similarly to Example 1, except that a package chip and an antenna circuit were connected with each other by mechanical caulking.

### (Example 3)

### (Preparation of Contactless IC Card/Tag)

The inlet sheet according to Example 1 is applicable to various modes of IC cards or tags.

As shown in Fig. 12, an inlet sheet prepared similarly to that according to Example 1 was fixed into a vessel 30 obtained by injection-molding ABS with an adhesive 32, and the vessel 30 was closed by thermal fusion, for preparing a contactless IC card/tag.

### (Example 4)

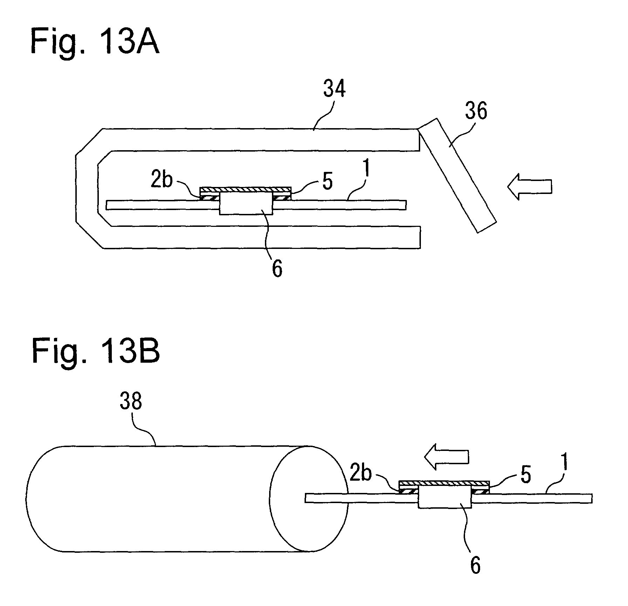

Figs. 13A and 13B show exemplary inlet sheets similar to that of Example 1, stored in vessels for preparing contactless IC cards/tags.

Referring to Fig. 13A, the inlet sheet was slid into a flat vessel 34 provided on an end thereof with an opening, which in turn was closed with a lid 36.

Referring to Fig. 13B, the inlet sheet was rounded and inserted into a tube 38 provided on an end thereof with an opening, which in turn was held and closed.

### (Example 5)

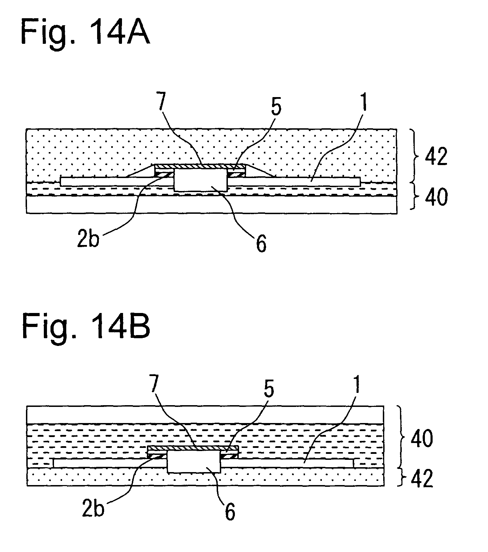

Figs. 14A and 14B show exemplary inlet sheets similar to that of Example 1, which were employed as tags bonded to articles.

Referring to Fig. 14A, the inlet sheet was bonded to a viscose paper 40, and a separable paper 42 was bonded onto the inlet sheet.

Referring to Fig. 14B, the inlet sheet was bonded to a viscose paper 40 while directing an IC chip 6 toward the viscose paper 40, and a separable paper 42 was bonded onto the inlet sheet.

The tag shown in each of Figs. 14A and 14B is used by separating the separable paper 42 and sticking the tag to an article while directing the inlet sheet inward.

### (Example 6)

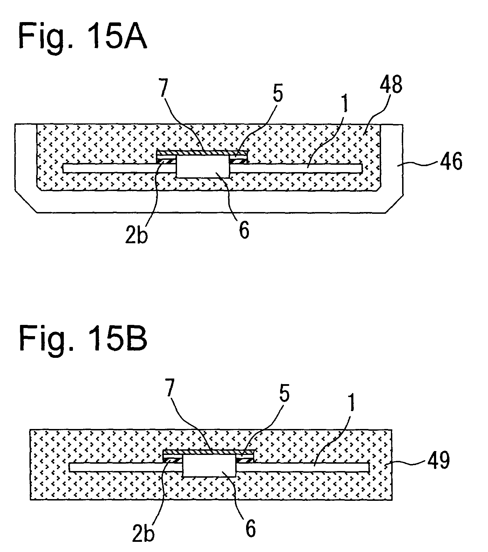

Figs. 15A and 15B show further exemplary inlet sheets similar to that of Example 1 worked into other modes of IC cards or tags.

Referring to Fig. 15A, the inlet sheet was inserted in a case 46 and sealing resin 48 was introduced into the vessel for sealing the inlet sheet in the case 46.

Referring to Fig. 15B, the inlet sheet was sealed with resin 49 without employing a vessel.

### [Outline of Card Reading Test Procedure]

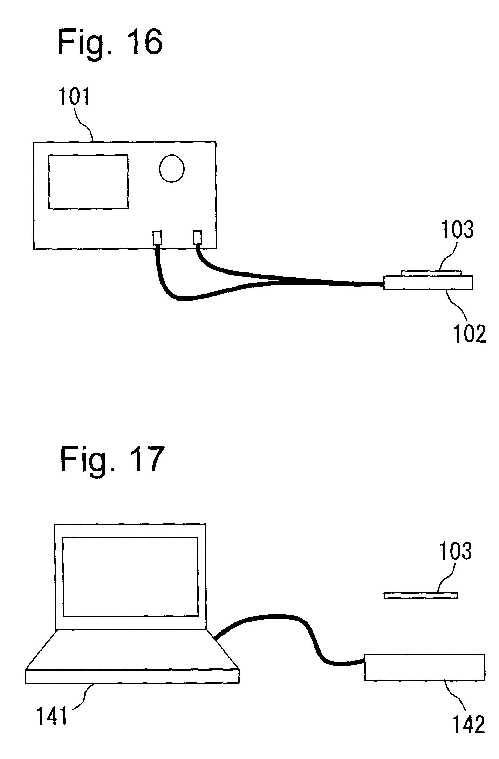

The resonance frequency of an exemplary contactless IC card (or tag) was first measured. Fig. 16 shows the state of this resonance frequency measurement. Fig. 16 schematically illustrates the resonance frequency measuring state for an IC card 103. The resonance frequency of the IC card 103 was measured by a measuring apparatus formed by connecting a loop antenna 102 of 5 cm in diameter to a network analyzer 101 (type No. R3754B: product by Advantest Corporation), to confirm that the resonance frequency was 13.56 MHz.

Then, a communication distance was measured. Fig. 17 shows the state of this communication distance measurement. Fig. 17 schematically illustrates the communication distance measuring state for an IC card 103. It was confirmed possible to make communication from a distance of 90 mm with a reader/writer 142 by Siemens K.K. connected to a PC 141.

As hereinabove described, it was confirmed that the IC card according to the present invention satisfies the resonance frequency, the communication distance etc. of the card.

## Claims

1. An IC package comprising an inlet sheet loaded with an electronic device (6), **characterized in that**
the inlet sheet comprises a substrate (1) and the electronic device (6) loaded on the substrate (1), and
a conductor (2b) provided on at least part of at least one surface of the substrate (1) is covered with a protective film (5), a terminal part (7) of the electronic device (6) and part of the conductor (2b) are oppositely arranged through the protective film (5), and at least part of the protective film (5) is broken on this opposed portion so that the terminal part (7) and the conductor (2b) are electrically connected with each other.

2. The IC package according to claim 1, wherein
the protective film (5) is a resist film for etching the conductor (2b).

3. The IC package according to claim 1 or 2, wherein
the conductor (2b) is an aluminum thin layer.

4. A method of fabricating an IC package comprising an inlet sheet having a substrate (1) loaded with an electronic device (6), **characterized in that**
a step of forming a conductor pattern (2b) covered with a protective film (5) on at least part of at least one surface of the substrate (1); and
a connection step of opposing a terminal part (7) of the electronic device (6) and part of the conductor (2b) to each other through the protective film (5) and thermally and/or mechanically breaking at least part of intervening the protective film (5) while electrically connecting the terminal part (7) and the conductor (2b) with each other.

5. The method of fabricating an IC package according to claim 4, wherein
the connection step is a step of thermally breaking the protective film (5) while connecting the terminal part (7) and the conductor (2b) with each other by resistance welding.

6. The method of fabricating an IC package according to claim 4, wherein
the connection step is a step of mechanically breaking the protective film (5) while connecting the terminal part (7) and the conductor (2b) with each other by caulking.

7. The method of fabricating an IC package according to claim 4, wherein
the connection step is a step of thermally breaking the protective film (5) while connecting the terminal part (7) and the conductor (2b) with each other by ultrasonic welding.

8. The method of fabricating an IC package according to claim 4, wherein
the connection step is a step of thermally breaking the protective film (5) while connecting the terminal part (7) and the conductor (2b) with each other by laser welding.
